# EUROPEAN PATENT SPECIFICATION

(11) **EP 3 764 519 B1**
(45) Date of publication and mention of the grant of the patent: **08.09.2021**
(21) Application number: 18909054.1
(22) Date of filing: 08.03.2018
(51) Int. Cl.: H02K 5/20, H02K 9/19

(54) **DYNAMO-ELECTRIC MACHINE AND METHOD FOR MANUFACTURING DYNAMO-ELECTRIC MACHINE**
DYNAMOELEKTRISCHE MASCHINE UND VERFAHREN ZUR HERSTELLUNG EINER DYNAMOELEKTRISCHEN MASCHINE
MACHINE DYNAMO-ÉLECTRIQUE ET PROCÉDÉ DE FABRICATION D'UNE MACHINE DYNAMO-ÉLECTRIQUE

(43) Date of publication of application: 13.01.2021
(73) Proprietor: NISSAN MOTOR CO., LTD., Yokohama-shi, Kanagawa 221-0023 (JP)
(72) Inventor: KAIMORI, Tomoaki, Atsugi-shi, Kanagawa 243-0123 (JP); KUWAHARA, Takashi, Atsugi-shi, Kanagawa 243-0123 (JP)
(74) Representative: Hoefer & Partner Patentanwälte mbB
(86) International application number: PCT/JP2018/008993
(87) International publication number: WO 2019/171535

(56) References cited:
- WO-A1-2015/098328
- WO-A1-2017/110527
- CN-A- 101 951 069
- DE-A1-102015 220 509
- JP-A- 2004 364 429
- JP-A- 2014 140 276
- JP-A- 2015 211 562
- JP-Y2- 2 591 284
- US-A1- 2008 223 557
- US-A1- 2016 172 940
- US-A1- 2017 373 547

## Description

### TECHNICAL FIELD

The present invention relates to a rotary electric machine and a method for manufacturing the rotary electric machine.

### BACKGROUND ART

There is known a rotary electric machine (motor) in which a housing fixing a stator is provided with a flow passage so as to cool the stator from the outer periphery of the stator by flowing a coolant such as cooling water in the flow passage.

For example, as disclosed in JP2016-46853A, a housing to a rotary electric machine is provided with a coolant flow passage along the outer periphery of the housing, and the coolant flow passage is provided with a partition extending in the axial direction and partitioning the coolant flow passage in the circumferential direction. US2016/172940 discloses another cooling system having a barrier element connected with a cooling jacket for spatial separation of an inlet region from an outlet region.

### SUMMARY OF INVENTION

According to the technique of JP2016-46853A, the partition is integrally provided with the housing. However, for example, in a configuration in which a flow passage is provided between a housing and a cover attached to the outer side of the housing, it may be configured that a partition is provided as a separate part. In such a configuration, while it is preferable that the partition be disposed in the correct orientation in the axial direction, there is a possibility of the occurrence of reverse assembly where the partition is disposed in the reverse orientation in the axial direction.

The present invention has been made in order to solve such a problem, and it is an object of the present invention to suppress reverse assembly of a partition in the axial direction in a housing of a rotary electric machine.

According to the present invention, a rotary electric machine configured to be cooled by flowing a coolant on an outer periphery, the rotary electric machine includes: a stator; a housing being a cylindrical member housing the stator on an inner periphery of the housing, the housing including a flow passage groove formed so as to be recessed in a circumferential direction on the outer periphery of the housing, the housing including on the outer periphery an annular first protruding portion and an annular second protruding portion facing each other in an axial direction via the flow passage groove and protruding in a radial direction; a cover covering the outer periphery of the housing and contacting with the first protruding portion and the second protruding portion; and a partition plate having one end disposed in a first cutout provided to the first protruding portion and the other end disposed in a second cutout provided to the second protruding portion, the partition plate partitioning the flow passage groove in the axial direction. The first cutout is larger in width than the second cutout in the circumferential direction. The one end of the partition plate is formed to be equal in width to the first cutout, and the other end of the partition plate is formed to be equal in width to the second cutout.

### BRIEF DESCRIPTION OF DRAWINGS

FIG. 1 is a perspective view of a housing of a motor of a first embodiment.
FIG. 2 is an exploded view of the housing.
FIG. 3 is a sectional view of the motor in the radial direction taken along A-A in FIG. 1.
FIG. 4 is a sectional view of the motor in the axial direction taken along B-B in FIG. 1.
FIG. 5A is a sectional view of the housing taken along C-C in FIG. 4.
FIG. 5B is a configuration diagram of a partition plate.
FIG. 6A is a sectional view of a part of a cover in the axial direction.
FIG. 6B is a sectional view of the partition plate in the axial direction.
FIG. 7A is a diagram illustrating an attaching process of the partition plate.
FIG. 7B is a sectional view of the motor in the axial direction taken along D-D in FIG. 7A.
FIG. 8 is a diagram illustrating an attaching process of the partition plate.
FIG. 9 is a diagram illustrating a rotation process.
FIG. 10 is a diagram illustrating an attaching process of the cover.
FIG. 11 is a diagram illustrating an attaching process of the cover.
FIG. 12 is a diagram illustrating an attaching process of the cover of a comparative example.
FIG. 13 is a diagram illustrating an attaching process of the cover of a comparative example.
FIG. 14 is a sectional view of a housing and a partition plate in a comparative example.
FIG. 15A is a sectional view of a partition plate of a second embodiment.
FIG. 15B is a configuration diagram illustrating the partition plate from the circumferential direction.
FIG. 16 is a sectional view of a housing of a motor.
FIG. 17 is a diagram illustrating an attaching process of the cover of a comparative example.
FIG. 18 is a diagram illustrating an attaching process of the cover of a comparative example.

### DESCRIPTION OF EMBODIMENTS

Motors (rotary electric machines) in embodiments of the present invention will be described.

### (First Embodiment)

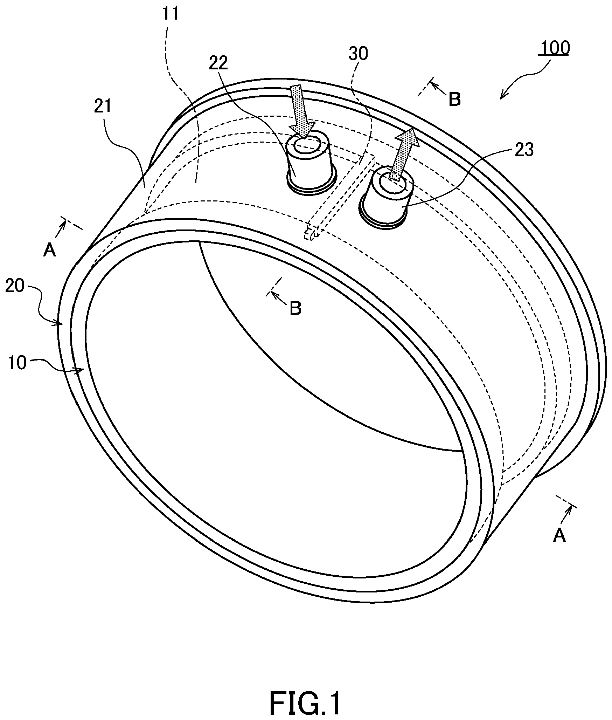

FIG. 1 is a perspective view of a motor 100 of a first embodiment.

The motor 100 includes a housing 10 housing a rotor and a stator (neither illustrated in FIG. 1), and a cylindrical cover 20 press-fitted to the housing 10.

The housing 10 is provided with a flow passage groove 11 formed by cutting the outer periphery of the housing 10 in uniform width in the circumferential direction. A bar-shaped partition plate 30 is provided in the flow passage groove 11 so as to block a part of the flow passage groove 11.

The cover 20 includes a cylindrical cover body 21, and the outer peripheral surface of the cover body 21 is provided with two openings (not illustrated) arranged side by side in the circumferential direction. A tubular inlet 22 and a tubular outlet 23 are provided so as to be connected to these openings. With this configuration, the outer peripheral side and the inner peripheral side of the cover body 21 communicate with each other through the inlet 22 and the outlet 23. Consequently, a coolant that flows in from the inlet 22 flows on the outer periphery of the housing 10 along the flow passage groove 11 and flows out from the outlet 23.

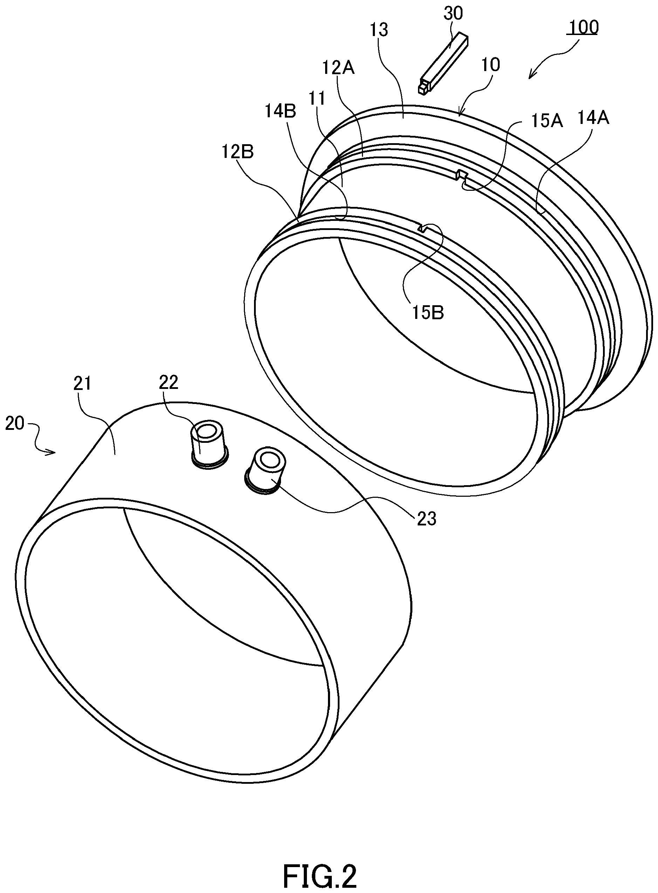

FIG. 2 is an exploded perspective view of the housing 10 of the motor 100 illustrated in FIG. 1.

The housing 10 is a cylindrical member made of a metal or the like and is formed with the annular flow passage groove 11, that is uniform in width along the outer periphery of the housing 10, by cutting on the outer peripheral surface of the housing 10. By the provision of the flow passage groove 11, there are provided a first protruding portion 12A and a second protruding portion 12B protruding annularly to face each other in the axial direction via the flow passage groove 11. Herein, the radially outward height of the first protruding portion 12A, located at the sheet back right in the drawing, from the flow passage groove 11 is larger than the radially outward height of the second protruding portion 12B, located at the sheet front left in the drawing, from the flow passage groove 11.

A flange-shaped stopper 13 larger in diameter than the first protruding portion 12A is provided axially outward (on the sheet back right side) of the first protruding portion 12A. The first protruding portion 12A and the second protruding portion 12B are respectively provided with an annular first seal groove 14A and an annular second seal groove 14B on the outer peripheral surfaces thereof.

The first protruding portion 12A and the second protruding portion 12B are respectively provided with a first cutout 15A and a second cutout 15B facing each other and being recessed in the axial direction. The first cutout 15A and the second cutout 15B are configured such that the partition plate 30 can be received therebetween. That is, the first cutout 15A and the second cutout 15B are configured such that opposing surfaces thereof in the axial direction are spaced apart from each other by the longitudinal length of the partition plate 30. As will be described later, the second cutout 15B is configured to be smaller in width than the first cutout 15A in the circumferential direction.

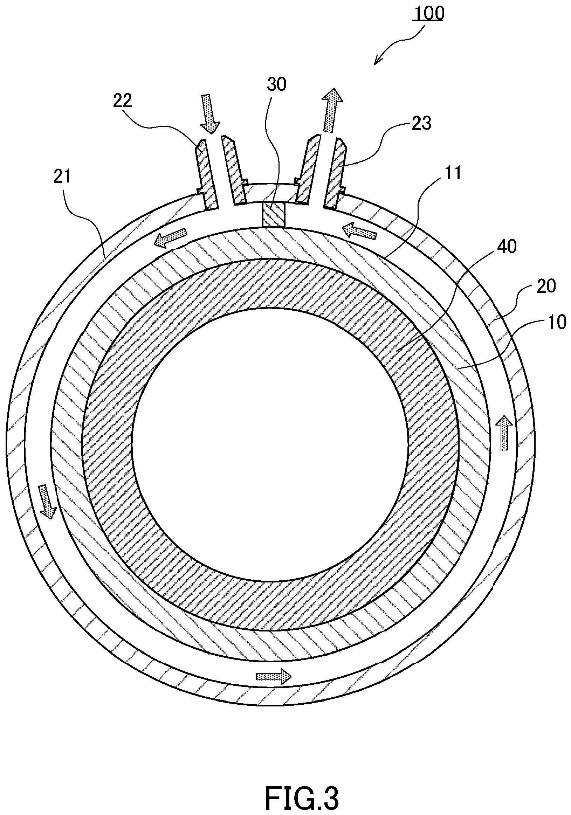

FIG. 3 is a sectional view of the motor 100 in the radial direction taken along A-A in FIG. 1. In this figure, there is illustrated a sectional view in the radial direction at a portion where the flow passage groove 11 is provided.

A stator 40 is fixed in the housing 10, and the flow passage groove 11 is provided between the housing 10 and the cover body 21 so as to circumferentially surround the housing 10. The partition plate 30 is attached to the housing 10 between the inlet 22 and the outlet 23 in the circumferential direction. Therefore, the coolant that flows in from the inlet 22 provided to the cover body 21 flows in the flow passage groove 11 along the outer periphery of the housing 10 and is discharged from the outlet 23. Since the partition plate 30 prevents the flow of the coolant in the circumferential direction, the coolant flows in the flow passage groove 11 in the counterclockwise direction in the figure. In this way, it is possible to cool the stator 40 by the coolant flowing on the outer periphery of the housing 10.

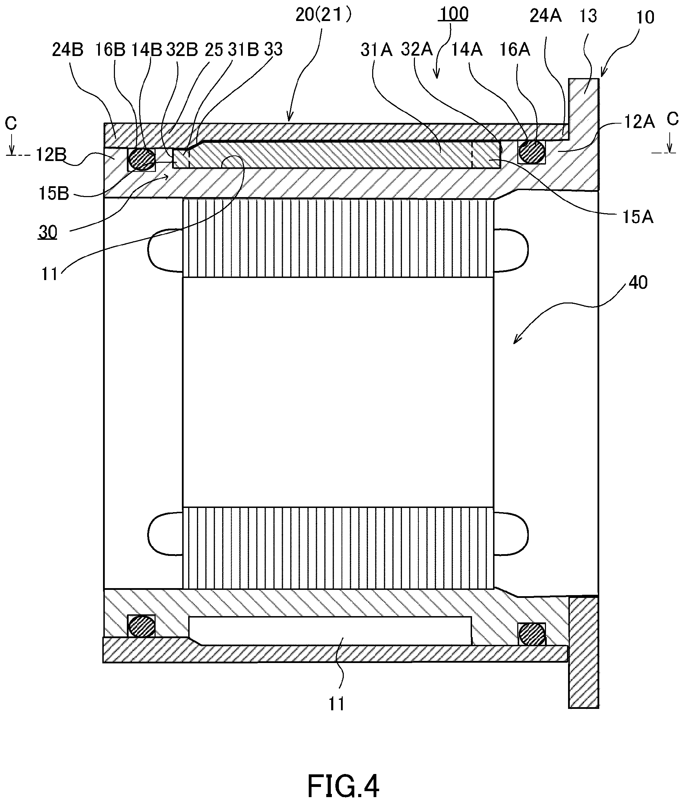

FIG. 4 is a sectional view of the motor 100 in the axial direction taken along B-B in FIG. 1.

In this figure, there is illustrated the stator 40 fixed in the housing 10. The motor 100 is illustrated such that the first cutout 15A and the second cutout 15B are disposed in the upper part of the drawing. An annular first O-ring 16A and an annular second O-ring 16B are respectively provided in the first seal groove 14A of the first protruding portion 12A and the second seal groove 14B of the second protruding portion 12B.

As described above, the first protruding portion 12A located at the right end of the flow passage groove 11 in the figure is configured to be higher in the radial direction than the second protruding portion 12B located at the left end of the flow passage groove 11 in the figure (the height upward in the figure from the flow passage groove 11 as a reference). The stopper 13 larger in diameter than the first protruding portion 12A is provided at an end portion of the first protruding portion 12A on the right side in the figure. The stopper 13 restricts the movement of the cover 20 in the axial direction.

The partition plate 30 is a prismatic plate member and is disposed between the first cutout 15A and the second cutout 15B with its longitudinal direction along the axial direction. The partition plate 30 is formed by two plate portions, i.e. a first plate portion 31A and a second plate portion 31B, and a first plate end portion 32A being an end portion of the first plate portion 31A is configured to be higher in the radial direction than a second plate end portion 32B being an end portion of the second plate portion 31B. Further, the partition plate 30 has a slope 33 in the first plate portion 31A in the vicinity of a contact surface between the first plate portion 31A and the second plate portion 31B. In the circumferential direction (the sheet front-back direction), the first plate end portion 32A is configured to be larger in width than the second plate end portion 32B.

The cover 20 is configured to be approximately uniform in outer diameter in the axial direction. In the cover 20, a second cover end 24B that contacts with the smaller-diameter second protruding portion 12B of the housing 10 is formed to be thicker than a first cover end 24A that contacts with the larger-diameter first protruding portion 12A. That is, the second cover end 24B is configured to be smaller in inner diameter than the first cover end 24A. In the state where the cover 20 is attached to the housing 10, the first cover end 24A with the larger inner diameter is in contact with the first protruding portion 12A, and the second cover end 24B with the smaller inner diameter is in contact with the second protruding portion 12B. Further, a tapered portion 25 is formed on the inner peripheral surface of the cover 20 so as to contact with the slope 33 of the partition plate 30.

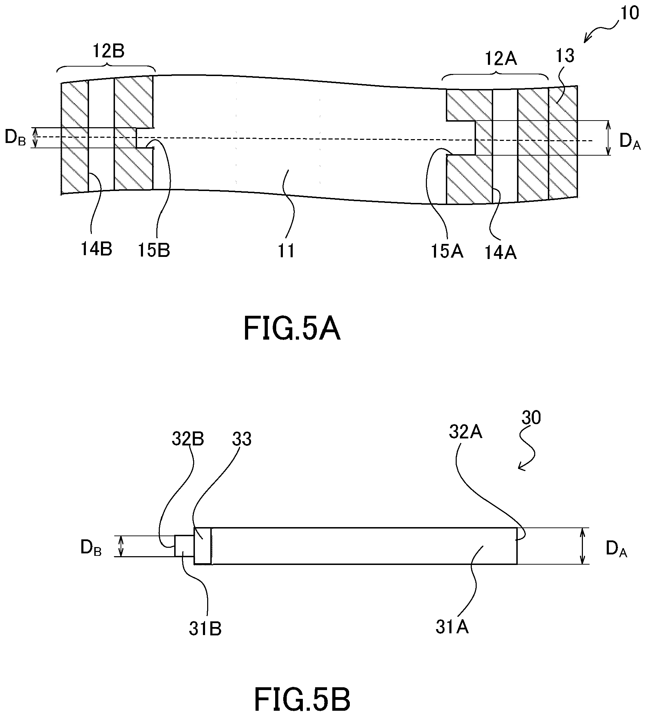

FIG. 5A is a sectional view of the housing 10 taken along C-C in FIG. 4. In this figure, there is illustrated a section of a portion where the first cutout 15A and the second cutout 15B of the housing 10 are provided. In this figure, the left-right direction represents the axial direction, and the up-down direction represents the circumferential direction. In this figure, the first O-ring 16A and the second O-ring 16B provided in the first seal groove 14A and the second seal groove 14B are omitted for readability.

A section of the stopper 13 that is continuous with the first protruding portion 12A in the axial direction is illustrated rightward of the flow passage groove 11. Further, the first cutout 15A extending in the axial direction and communicating with the flow passage groove 11 is provided in the first protruding portion 12A.

The second protruding portion 12B is provided leftward of the flow passage groove 11. Further, the second cutout 15B extending in the axial direction and communicating with the flow passage groove 11 is provided in the second protruding portion 12B.

The first cutout 15A and the second cutout 15B are disposed such that the centers thereof coincide with each other in the axial direction. The width D_{A} of the first cutout 15A in the circumferential direction is larger than the width D_{B} of the second cutout 15B in the circumferential direction.

FIG. 5B is a configuration diagram of the partition plate 30. There is illustrated a configuration of the partition plate 30 as viewed from the outer peripheral side of the housing 10 in the state where the partition plate 30 is attached to the housing 10. In this figure, the left-right direction represents the axial direction of the motor 100, and the up-down direction represents the circumferential direction.

In the circumferential direction, the partition plate 30 is formed by the first plate portion 31A having the first plate end portion 32A and the second plate portion 31B having the second plate end portion 32B. The width of the first plate end portion 32A in the circumferential direction is D_{A}, and the width of the second plate end portion 32B in the circumferential direction is D_{B} smaller than D_{A}. In the axial direction, the first plate portion 31A is longer than the second plate portion 31B. In this embodiment, the partition plate 30 has the slope 33 in the first plate portion 31A on the outer peripheral surface (the surface on the figure front side) contacting with the second plate portion 31B in the axial direction. The slope 33 is configured to be inclined downward from the first plate end portion 32A toward the second plate end portion 32B.

When the partition plate 30 is attached to the housing 10, the first plate end portion 32A is fitted into the first cutout 15A illustrated in FIG. 5A, and the second plate end portion 32B is fitted into the second cutout 15B.

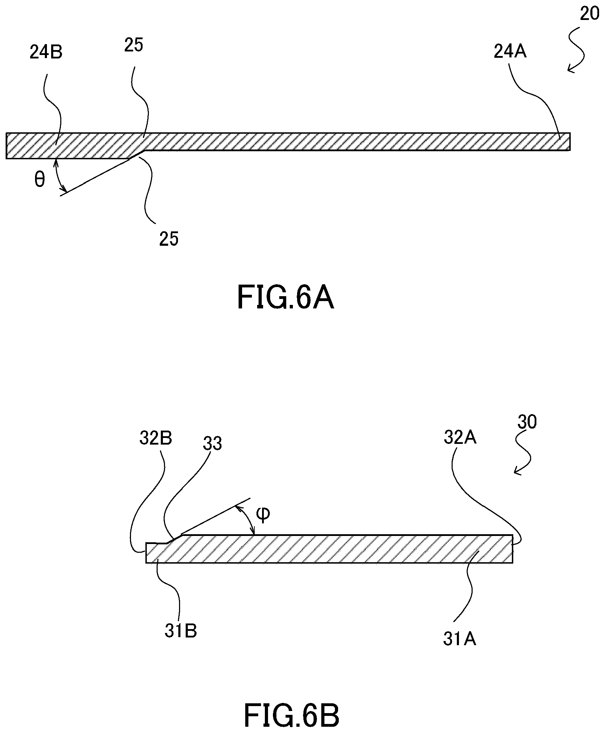

When the cover 20 is attached to the housing 10 as illustrated in FIG. 4, the tapered portion 25 of the cover 20 and the slope 33 of the partition plate 30 face each other. Therefore, it is desirable that an angle φ of the slope 33 relative to an upper surface of the second plate end portion 32B illustrated in FIG. 6B be approximately equal to an angle θ of the tapered portion 25 of the cover 20 illustrated in FIG. 6A. With this configuration, when the housing 10 with the partition plate 30 is press-fitted into the cover 20, surfaces of the tapered portion 25 of the cover 20 and the slope 33 of the partition plate 30 come in contact with each other, and therefore, a gap between the cover 20 and the partition plate 30 becomes small so that it is possible to block the coolant flowing in the flow passage groove 11.

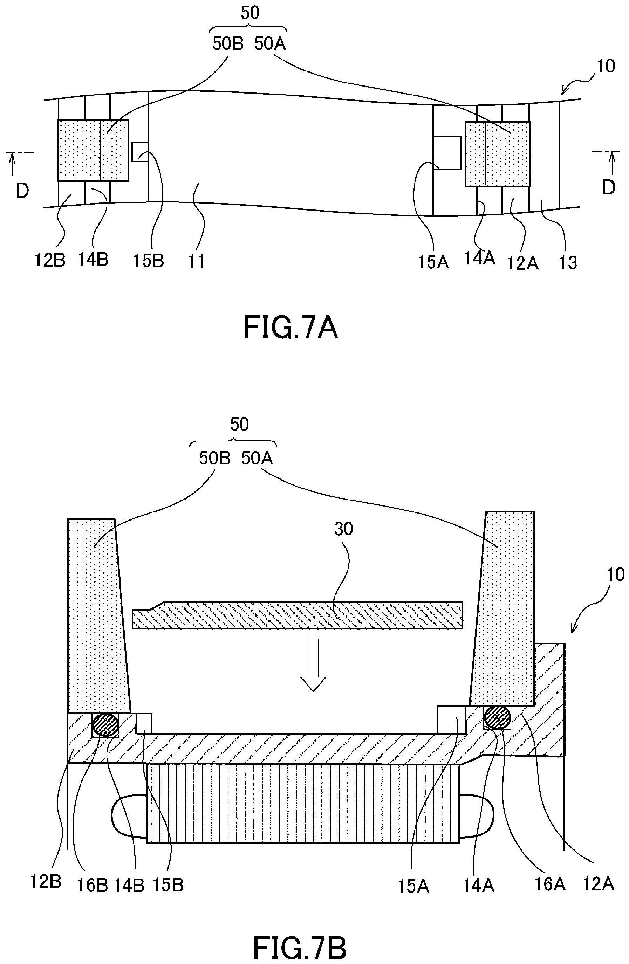

Referring to FIGS. 7A to 11, the assembly process of the motor 100 will be described below. Note that the stator 40 is attached to the inner diameter of the housing 10 prior to the process of FIGS. 7A and 7B.

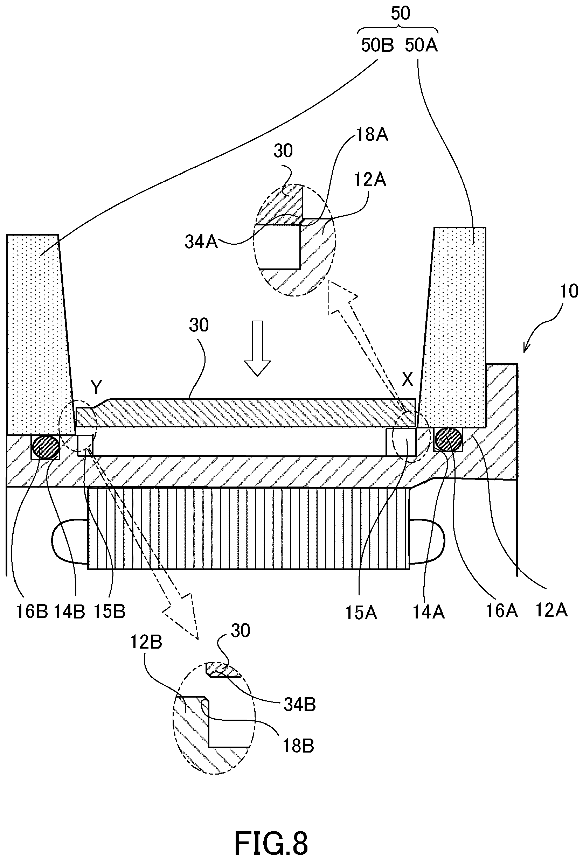

FIGS. 7A and 7B and FIG. 8 are diagrams illustrating the attaching process of the partition plate 30.

In FIG. 7A, the housing 10 is illustrated from the outer peripheral side. FIG. 7B is a D-D sectional view of FIG. 7A. For readability, the partition plate 30 is not illustrated in FIG. 7A.

As illustrated in these figures, in the state where the first O-ring 16A is fitted in the first seal groove 14A and the second O-ring 16B is fitted in the second seal groove 14B, guides 50 in the form of a first guide 50A and a second guide 50B are respectively mounted near the first cutout 15A and the second cutout 15B of the housing 10 from the outer peripheral side.

As illustrated in FIG. 7B, the first guide 50A is disposed on the first protruding portion 12A. At the same time, a right side surface of the first guide 50A comes in contact with an inner surface of the stopper 13, and a left side surface thereof is provided on the housing 10 slightly rightward of a right end portion of the first cutout 15A in the figure.

As illustrated in FIG. 7B, the second guide 50B is disposed on the second protruding portion 12B. At the same time, a right side surface of the second guide 50B is provided so as to be located slightly leftward of a side surface of the second cutout 15B in the figure.

The side surfaces of the first guide 50A and the second guide 50B facing each other on the flow passage groove 11 side are each configured to increase in width toward the housing 10. Therefore, the distance between the side surfaces of the first guide 50A and the second guide 50B facing each other via the flow passage groove 11 decreases toward the housing 10. The facing surfaces of the first guide 50A and the second guide 50B are provided to be continuous with the side surfaces of the first cutout 15A and the second cutout 15B at portions contacting with the housing 10. Using the first guide 50A and the second guide 50B having such inclined inner surfaces, it is possible to smoothly insert the partition plate 30 between the first cutout 15A and the second cutout 15B.

FIG. 8 is a diagram illustrating the attaching process of the partition plate 30 after FIGS. 7A and 7B. FIG. 8 is a sectional view corresponding to FIG. 7B and is a diagram illustrating a state immediately before the partition plate 30 is fitted into the flow passage groove 11.

As illustrated in a region X in the figure, in the housing 10, an open end portion of the first cutout 15A in the outer peripheral surface of the first protruding portion 12A, i.e. a side, extending in the sheet front-back direction, of a right side surface of an end face portion of the first cutout 15A, is chamfered so that a chamfered portion 18A is formed. In the partition plate 30, an end portion of a bottom surface facing the flow passage groove 11 in the state where the partition plate 30 is fitted in the first cutout 15A, i.e. a side, extending in the sheet front-back direction and facing the first cutout 15A, of sides forming the bottom surface, is chamfered so that a chamfered portion 34A is formed.

Therefore, even when the partition plate 30 is offset in the axial direction and rides on the first protruding portion 12A, when the chamfered portion 18A and the chamfered portion 34A come in contact with each other at the contact portions of the first protruding portion 12A and the partition plate 30, the partition plate 30 is guided to the first cutout 15A. Note that when the total height of the chamfered portion 34A of the partition plate 30 and the chamfered portion 18A of the housing 10 is larger than the depth of the flow passage groove 11 in the radial direction, the partition plate 30 does not ride on the housing 10 when the reverse assembly occurs as will be described later. Therefore, it is necessary that the sum of the height of the chamfered portion 34A of the partition plate 30 and the height of the chamfered portion 18A of the housing 10 be set to be smaller than the depth of the flow passage groove 11 in the radial direction.

Likewise, as illustrated in a region Y in the figure, in the second protruding portion 12B of the housing 10 and the partition plate 30, a chamfered portion 18B and a chamfered portion 34B are respectively formed at sides (sides each extending in the sheet front-back direction) facing each other in a state immediately before the partition plate 30 is fitted into the flow passage groove 11. Therefore, even when the partition plate 30 rides on the second protruding portion 12B, when the chamfered portion 18B and the chamfered portion 34B come in contact with each other at the contact sides of the second protruding portion 12B and the partition plate 30, the partition plate 30 is guided to the second cutout 15B.

In the housing 10 and the partition plate 30, chamfered portions may be formed not only at the corners of the sides extending in the circumferential direction, but also at the corners of the sides extending in the axial direction. That is, in the housing 10, chamfered portions may be formed at the open end portions of the first cutout 15A in the outer peripheral surface of the first protruding portion 12A and at the open end portions of the second cutout 15B of the second protruding portion 12B. Further, in the partition plate 30, chamfered portions may be formed at the end portions of the facing surface (all the sides forming the facing surface) facing the flow passage groove 11. With this configuration, even when the partition plate 30 is offset not only in the axial direction, but also in the circumferential direction, the partition plate 30 is guided to the first cutout 15A and the second cutout 15B.

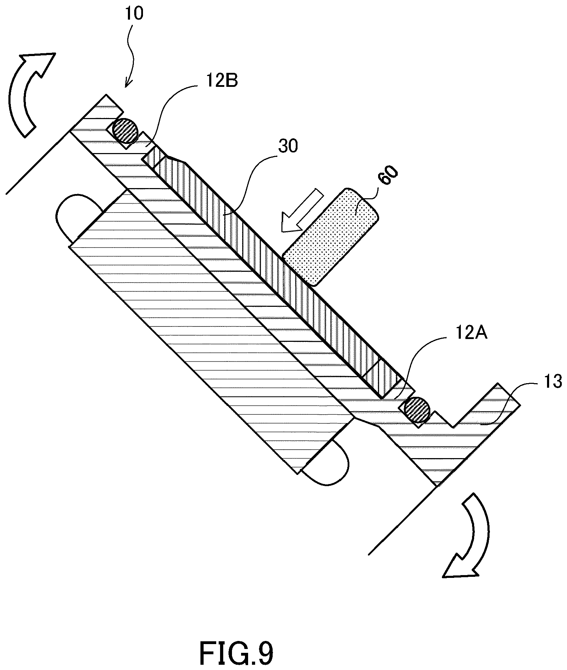

After the attaching process of the partition plate 30 illustrated in FIGS. 7A to 8 is finished, the rotation process illustrated in FIG. 9 is performed.

FIG. 9 is a diagram illustrating the rotation process of the housing 10. As illustrated in this figure, the housing 10 attached with the partition plate 30 is, in the state where the partition plate 30 is fixed by a fixing device 60, rotated so that the second protruding portion 12B is located upward in the vertical direction and that the first protruding portion 12A and the stopper 13 side are located downward, resulting in that the housing 10 is disposed with its axial direction being vertical.

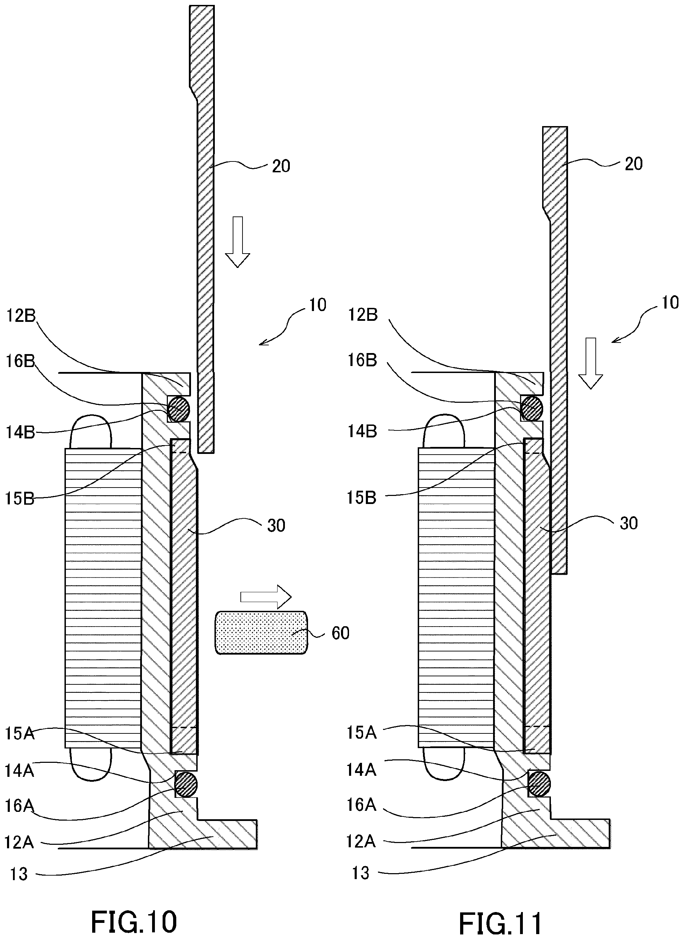

After the rotation process of FIG. 9 is finished, the attaching process of the cover 20 illustrated in FIGS. 10 and 11 is performed.

FIGS. 10 and 11 are diagrams illustrating the attaching process of the cover 20.

First, as illustrated in FIG. 10, the partition plate 30 fitted in the first cutout 15A and the second cutout 15B of the housing 10 is released from being fixed by the fixing device 60. Then, above the housing 10, the cover 20 starts moving toward the housing 10.

Then, as illustrated in FIG. 11, an upper part of the partition plate 30 is covered with the cover 20 so that coming-off of the partition plate 30 from the housing 10 is suppressed by the cover 20. Thereafter, when the cover 20 is moved to come into contact with the stopper 13 at an end portion of the cover 20 so that the cover 20 covers the entire outer periphery of the housing 10, the attaching process of the cover 20 is finished. In this way, the motor 100 illustrated in FIG. 4 and so on is assembled.

Herein, it may happen that the reverse assembly is performed in the attaching process in FIGS. 7A to 8. The reverse assembly is such that the partition plate 30 is attached in the reverse orientation in the axial direction. In this embodiment, in the circumferential direction, the first plate end portion 32A is larger in width than the second plate end portion 32B in the partition plate 30, and the first cutout 15A is larger in width than the second cutout 15B in the housing 10. By providing the difference in width in the circumferential direction in this way, the first plate end portion 32A cannot be fitted into the second cutout 15B, and therefore, it is possible to detect the reverse assembly.

Further, in this embodiment, by providing the rotation process illustrated in FIG. 9, it is possible to detect the reverse assembly of the partition plate 30 early. The mechanism of detecting such reverse assembly will be described below.

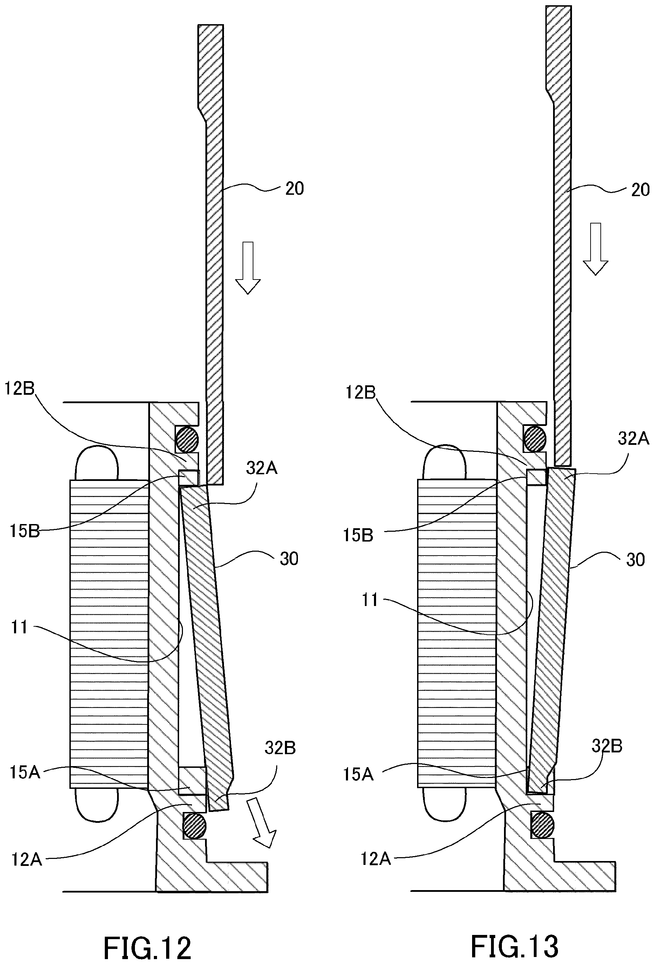

FIGS. 12 and 13 are diagrams each illustrating an attaching process of the cover 20 of a comparative example. In these figures, the reverse assembly is performed so that the partition plate 30 is disposed in the reverse orientation in the axial direction.

In each of FIGS. 12 and 13, the partition plate 30 is reversely assembled in the axial direction so that the first plate end portion 32A is disposed on the side where the second cutout 15B of the flow passage groove 11 is provided and that the second plate end portion 32B is disposed on the side where the first cutout 15A of the flow passage groove 11 is provided.

Specifically, in FIG. 12, there is illustrated an example in which the first plate end portion 32A is fitted into the flow passage groove 11, and the second plate end portion 32B rides on the first protruding portion 12A. Since the first plate end portion 32A is larger in width than the second cutout 15B, the first plate end portion 32A is never fitted into the second cutout 15B.

In this case, the first plate end portion 32A fitted in the flow passage groove 11 becomes higher than the second protruding portion 12B in the radial direction (the left-right direction in the figure). Therefore, when attaching the cover 20, the cover 20 contacts with the first plate end portion 32A from above so that a downward external force acts on the partition plate 30. Since the second plate end portion 32B rides on the first protruding portion 12A at a lower portion of the partition plate 30, the partition plate 30 is not in a state of being locked by something. Therefore, the partition plate 30 comes off the flow passage groove 11 downward due to the external force from above and the gravity. In this way, it is possible to detect the reverse assembly of the partition plate 30 early. Such coming-off of the partition plate 30 may also occur at the timing when the fixation of the partition plate 30 by the fixing device 60 is released after the rotation process illustrated in FIG. 9.

In FIG. 13, there is illustrated an example in which the first plate end portion 32A rides on the second protruding portion 12B, and the second plate end portion 32B is fitted into the first cutout 15A. Since the second plate end portion 32B is configured to be smaller in width than the first cutout 15A in the circumferential direction, the second plate end portion 32B may possibly be fitted into the first cutout 15A.

When attached to the housing 10, the cover 20 contacts with the first plate end portion 32A riding on the second protruding portion 12B in the circumferential direction. Therefore, in the case of the reverse assembly as in FIG. 13, the cover 20 cannot be attached so that it is possible to detect the reverse assembly of the partition plate 30 early.

According to the first embodiment, the following effects can be obtained.

According to the motor 100 of the first embodiment, in the partition plate 30, the first plate end portion 32A being one end in the axial direction is configured to be larger in width in the circumferential direction than the second plate end portion 32B being the other end, the first plate end portion 32A is formed to be approximately equal in width to the first cutout 15A, and the second plate end portion 32B is formed to be approximately equal in width to the second cutout 15B. That is, the first cutout 15A is configured to be larger in width than the second cutout 15B.

With this configuration, even when the reverse assembly occurs in which the partition plate 30 is disposed in reverse in the axial direction, since the first plate end portion 32A is not fitted into the second cutout 15B and rides on the second protruding portion 12B of the housing 10, it is possible to detect the reverse assembly. In this way, it is possible to prevent the reverse assembly of the partition plate 30.

According to the motor 100 of the first embodiment, in the partition plate 30, the first plate end portion 32A being one end in the axial direction is configured to be larger in width in the circumferential direction than the second plate end portion 32B being the other end, the first plate end portion 32A is formed to be approximately equal in width to the first cutout 15A, and the second plate end portion 32B is formed to be approximately equal in width to the second cutout 15B. That is, the first cutout 15A is configured to be larger in width than the second cutout 15B. The cover 20 is attached to the housing 10 from the end portion on the second protruding portion 12B side being the side where the stopper 13 is not provided, toward the first protruding portion 12A. Therefore, when the reverse assembly occurs so that the first plate end portion 32A rides on the second protruding portion 12B, since the cover 20 is attached to the housing 10 from the second protruding portion 12B side, the cover 20 inevitably collides with the first plate end portion 32A riding on the second protruding portion 12B so that it is possible to detect the reverse assembly.

Herein, as illustrated in FIG. 13, a state may occur in which the first plate end portion 32A rides on the second protruding portion 12B, and the second plate end portion 32B is fitted into the first cutout 15A. A consideration is given to a comparative example in which, in such a state, the cover 20 is assumedly attached from the first protruding portion 12A side where the first cutout 15A is provided.

In this comparative example, the reverse assembly cannot be detected at the stage where the cover 20 covers the first protruding portion 12A, and at the time when the cover 20 covers most of the flow passage groove 11, attaching of the cover 20 becomes impossible so that the reverse assembly is detected, and therefore, the time until the detection becomes long. At the time when such reverse assembly is detected, the second plate end portion 32B is in contact with the first cutout 15A and the first plate end portion 32A is in contact with the second protruding portion 12B on the inner peripheral surface of the partition plate 30, and the partition plate 30 is in contact with the cover 20 in the vicinity of the center in the axial direction on the outer peripheral surface of the partition plate 30. The cover 20 and the partition plate 30 are deformed when such a stress is applied, and when deformed, it becomes difficult to reuse the cover 20 and the partition plate 30. In this embodiment, as illustrated in FIGS. 12 and 13, since the reverse assembly can be detected before the cover 20 covers the end portion of the partition plate 30, it is possible to detect the reverse assembly early and to enable the reuse of the cover 20 and the partition plate 30.

According to the motor 100 of the first embodiment, the housing 10 is formed with the chamfered portions 18A, 18B at the portions that come in contact with the partition plate 30 immediately before the partition plate 30 is fitted into the flow passage groove 11.

Specifically, the chamfered portion 18A is formed in the end face of the first cutout 15A in the side surface of the first protruding portion 12A, and the chamfered portion 18B is formed in the end face of the second cutout 15B in the side surface of the second protruding portion 12B. The partition plate 30 is formed with the chamfered portions 34A, 34B at the portions that come in contact with the housing 10 immediately before the partition plate 30 is fitted into the flow passage groove 11. Specifically, in the partition plate 30, the chamfered portion 34A is formed at the side forming the surface facing the housing 10 in the first protruding portion 12A, and the chamfered portion 34B is formed at the side forming the surface facing the housing 10 in the second protruding portion 12B.

By the formation of the chamfered portions 18A, 18B on the housing 10 and the formation of the chamfered portions 34A, 34B on the partition plate 30, even when the partition plate 30 is offset in position when inserting the partition plate 30, when the chamfered portions 18A, 18B and the chamfered portions 34A, 34B come in contact with each other, the partition plate 30 is guided by the chamfered portions 18A, 18B and the chamfered portions 34A, 34B immediately before the partition plate 30 is fitted into the flow passage groove 11, and therefore, it is possible to smoothly fit the partition plate 30 into the flow passage groove 11.

According to the motor 100 of the first embodiment, the first protruding portion 12A is configured to be higher than the second protruding portion 12B in the radial direction, the partition plate 30 has, on the outer peripheral surface, the slope 33 that becomes lower in the radial direction from the first plate end portion 32A toward the second plate end portion 32B, and the cover 20 has, on the inner surface, the tapered portion 25 that contacts with the slope 33.

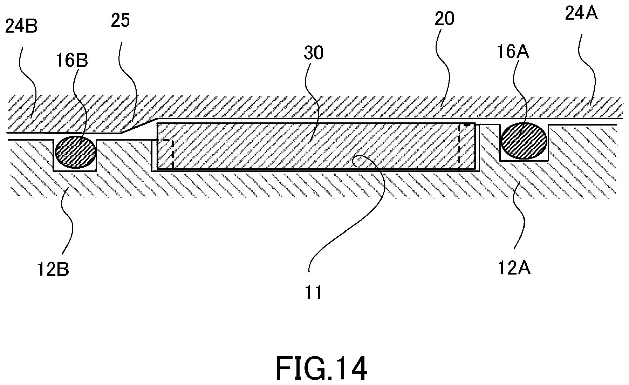

FIG. 14 illustrates the configuration of a partition plate 30 in a comparative example. In this comparative example, the partition plate 30 is not provided with a slope 33. In a cover 20, in order to ensure a wider contact surface with the partition plate 30, a tapered portion 25 is provided more on the second cover end 24B side than the partition plate 30. Therefore, it is necessary that the length of a second protruding portion 12B in the axial direction be set to be longer by the length of the tapered portion 25.

On the other hand, according to this embodiment, in the partition plate 30, the first plate end portion 32A is configured to be higher than the second plate end portion 32B, and the slope 33 is provided between the first plate end portion 32A and the second plate end portion 32B. Since the cover 20 has the tapered portion 25 at the position facing the slope 33 of the partition plate 30, the tapered portion 25 is not provided at the second protruding portion 12B differently from the comparative example of FIG. 14, but is provided in the flow passage groove 11. Therefore, it is suppressed that the length is made longer due to the provision of the tapered portion 25 at the second protruding portion 12B as in the comparative example, and consequently, the groove width of the flow passage groove 11 may possibly be prevented from being shortened.

A method for manufacturing the motor 100 of the first embodiment includes a disposing step of disposing the partition plate 30 in the housing 10, and an attaching step of the cover 20. In the attaching step, the cover 20 is attached to the housing 10 from the second protruding portion 12B side.

For example, as illustrated in FIG. 12, it may happen that the reverse assembly occurs so that the first plate end portion 32A is fitted into the flow passage groove 11 and that the second plate end portion 32B rides on the first protruding portion 12A. In such a case, since the first plate end portion 32A fitted in the flow passage groove 11 becomes higher than the second protruding portion 12B in the axial direction, when attaching the cover 20, the cover 20 contacts with the first plate end portion 32A from above so that the downward stress acts on the partition plate 30. Since the second plate end portion 32B rides on the first protruding portion 12A at a lower portion of the partition plate 30, the partition plate 30 is not in a state of being locked by something. Therefore, the partition plate 30 comes off the flow passage groove 11 downward due to the action of the stress from above and the action of gravity. In this way, it is possible to detect the reverse assembly of the partition plate 30.

### (Second Embodiment)

In the first embodiment, the description has been given of the example in which the slope 33 is provided only on the outer peripheral surface of the partition plate 30. In a second embodiment, a description will be given of an example in which a partition plate 30 is provided with a slope 33 not only on the outer peripheral surface, but also on the inner peripheral surface.

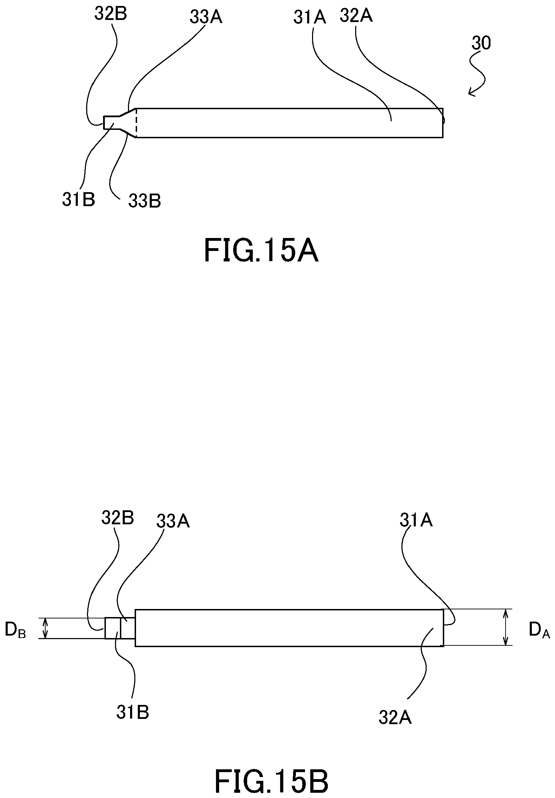

FIG. 15A is a sectional view of the partition plate 30 of the second embodiment. This figure corresponds to FIG. 4 in terms of the state of the partition plate 30 being fitted in the flow passage groove 11, wherein the left-right direction represents the axial direction and the up-down direction represents the axial direction.

FIG. 15B is a diagram illustrating the partition plate 30 from the outer peripheral side. This figure corresponds to FIG. 5B. In this figure, the left-right direction represents the axial direction, and the up-down direction represents the circumferential direction.

As illustrated in FIG. 15A, the partition plate 30 is configured such that a second plate portion 31B is thinner than a first plate portion 31A in the radial direction. The slope 33 includes, in the second plate portion 31B, a first slope 33A on the outer peripheral surface and a second slope 33B on the inner peripheral surface. The second plate portion 31B is connected to the first plate portion 31A via the first slope 33A and the second slope 33B. The partition plate 30 is configured such that the inner peripheral surface and the outer peripheral surface are vertically symmetrical with each other with respect to the axial center. That is, the first slope 33A provided on the outer peripheral surface and the second slope 33B provided on the inner peripheral surface are disposed at the corresponding positions.

FIG. 15B illustrates the first slope 33A provided in a second plate end portion 32B on the side contacting with a first plate end portion 32A.

With this configuration, even when the partition plate 30 is disposed with the inner peripheral surface and the outer peripheral surface located in the reverse orientation, the second slope 33B located on the outer peripheral surface comes in contact with a tapered portion 25 of a cover 20, and therefore, it is possible to structurally prevent the occurrence itself of the reverse assembly in the radial direction.

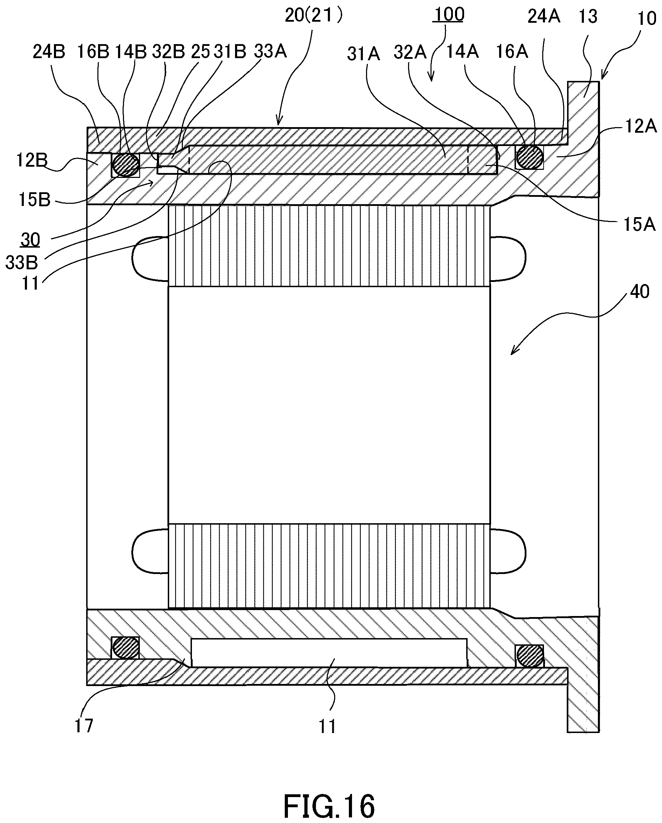

FIG. 16 is a sectional view of a motor 100 of the second embodiment. FIG. 16 corresponds to FIG. 4, wherein the left-right direction represents the axial direction and the up-down direction represents the radial direction.

In the state where the partition plate 30 is fitted in the flow passage groove 11, the second slope 33B is disposed in a second cutout 15B. A second protruding portion 12B includes, at an end portion contacting with the flow passage groove 11, a slope 17 that becomes higher toward the flow passage groove 11. In the state where the cover 20 is attached, the slope 17 comes in contact with the tapered portion 25 of the cover 20.

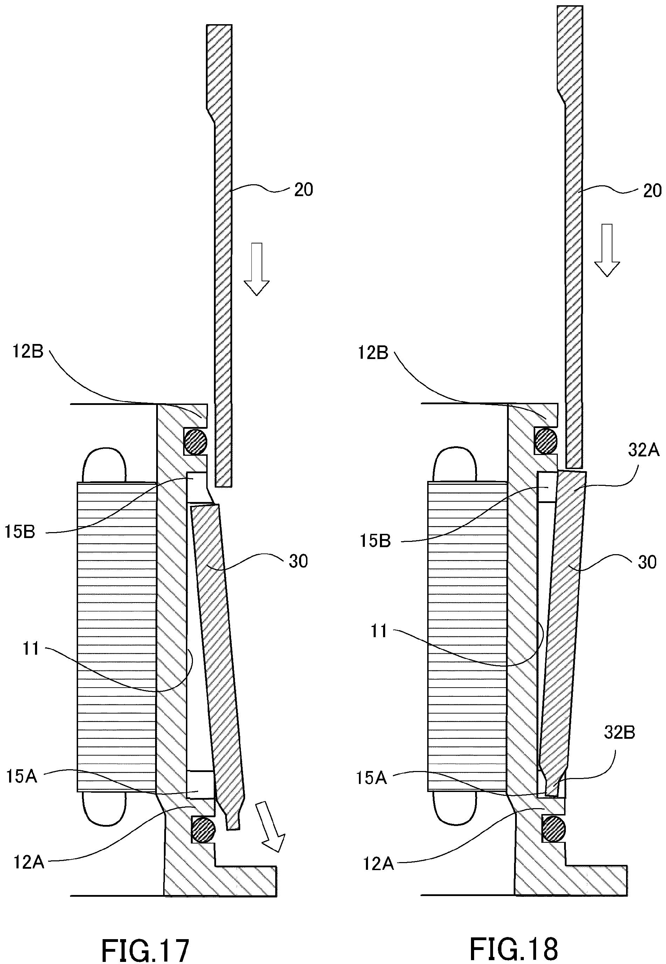

FIGS. 17 and 18 are diagrams each illustrating an attaching process of the cover 20 of a comparative example. In these figures, the reverse assembly is performed so that the partition plate 30 is disposed in the reverse orientation in the axial direction.

FIGS. 17 and 18 correspond to FIGS. 12 and 13. That is, in these figures, the partition plate 30 is reversely assembled in the axial direction so that the first plate end portion 32A is disposed on the side where the second cutout 15B of the flow passage groove 11 is provided and that the second plate end portion 32B is disposed on the side where the first cutout 15A of the flow passage groove 11 is provided.

In FIG. 17, the first plate end portion 32A is fitted into the flow passage groove 11, and the second plate end portion 32B rides on the first protruding portion 12A. In this case, since the first plate end portion 32A fitted in the flow passage groove 11 is higher than the second protruding portion 12B in the axial direction, when attaching the cover 20, the downward stress acts on the partition plate 30 by the cover 20. Since the partition plate 30 is not in a state of being locked by something at a lower portion of the partition plate 30, the partition plate 30 comes off the flow passage groove 11 downward due to the stress from above and the gravity. In this way, it is possible to detect the reverse assembly of the partition plate 30.

In FIG. 18, the first plate end portion 32A rides on the second protruding portion 12B, and the second plate end portion 32B is fitted into the first cutout 15A. In this case, when attached to the housing 10, the cover 20 contacts with the first plate end portion 32A riding on the second protruding portion 12B in the circumferential direction. Therefore, the cover 20 cannot be attached so that it is possible to detect the reverse assembly of the partition plate 30.

According to the second embodiment, the following effects can be obtained.

According to the motor 100 of the second embodiment, since the partition plate 30 is configured such that the outer peripheral surface and the inner peripheral surface are symmetrical with each other with respect to the central axis of the partition plate 30, the second slope 33B is provided also on the inner peripheral surface side at the position corresponding to the first slope 33A on the outer peripheral surface side. Therefore, it is possible to not only suppress the reverse assembly in the axial direction as in the first embodiment, but also suppress the reverse assembly in the radial direction since even when the reverse assembly occurs in the radial direction (the up-down direction), the second slope 33B is located on the outer peripheral surface side so as to contact with the tapered portion 25 of the cover 20.

According to the motor 100 of the second embodiment, in the state where the partition plate 30 is attached to the housing 10, the second slope 33B is disposed in the second cutout 15B. A gap is formed between the second slope 33B and a bottom surface of the second cutout 15B. Assuming that the second slope 33B is disposed in the flow passage groove 11, not in the second cutout 15B, the coolant flows between the second slope 33B and a bottom surface of the flow passage groove 11. On the other hand, in this embodiment, since the gap formed by the second slope 33B is located in the second cutout 15B, it is possible to reliably perform the partitioning of the coolant in the flow passage groove 11 by the partition plate 30.

In each of the embodiments, the description has been given by using the example in which the motor 100 is the electric motor, but not limited thereto. For example, instead of the motor 100, it may be configured as a generator that generates power by being driven by an external force.

While the embodiments of the present invention have been described above, the above-described embodiments only show part of application examples of the present invention and are not intended to limit the technical scope of the present invention to the specific configurations of the above-described embodiments. The above-described embodiments can be combined as appropriate. The scope of the invention is defined by the appended claims.

## Claims

1. A rotary electric machine (100) configured to be cooled by flowing a coolant on an outer periphery, the rotary electric machine (100) comprising:
a stator (40);
a housing (10) being a cylindrical member housing the stator (40) on an inner periphery of the housing (10), the housing (10) including a flow passage groove (11) formed so as to be recessed in a circumferential direction on the outer periphery of the housing (10), the housing (10) including on the outer periphery an annular first protruding portion (12A) and an annular second protruding portion (12B) facing each other in an axial direction via the flow passage groove (11) and protruding in a radial direction;
a cover (20) covering the outer periphery of the housing (10) and contacting with the first protruding portion (12A) and the second protruding portion (12B); **characterized in** further comprising:
a partition plate (30) having one end disposed in a first cutout (15A) provided to the first protruding portion (12A) and the other end disposed in a second cutout (15B) provided to the second protruding portion (12B), the partition plate (30) arranged in axial direction and partitioning the flow passage groove (11) in the circumferential direction,
wherein:
the first cutout (15A) is larger in width than the second cutout (15B) in the circumferential direction; and
the one end of the partition plate (30) is formed to be equal in width to the first cutout (15A), and the other end of the partition plate (30) is formed to be equal in width to the second cutout (15B).

2. The rotary electric machine (100) according to claim 1, wherein the cover (20) is fitted to the housing (10) from an end portion on a side of the second protruding portion (12B).

3. The rotary electric machine (100) according to claim 1 or 2, wherein the housing (10) includes a stopper (13) at an end portion on a side of the first protruding portion (12A), the stopper (13) configured to restrict movement of the cover (20) along the outer periphery.

4. The rotary electric machine (100) according to any one of claims 1 to 3, wherein:
the housing (10) includes chamfered portions respectively at an open end portion of the first cutout (15A) in an outer peripheral surface of the first protruding portion (12A) and at an open end portion of the second cutout (15B) in an outer peripheral surface of the second protruding portion (12B); and
the partition plate (30) includes chamfered portions respectively at end portions of a surface facing the flow passage groove (11).

5. The rotary electric machine (100) according to any one of claims 1 to 4, wherein:
the first protruding portion (12A) is configured to be higher than the second protruding portion (12B) in the radial direction;
the partition plate (30) includes, on an outer peripheral surface, a slope (33) that becomes lower in the radial direction from the one end toward the other end; and
the cover (20) includes, at a position facing the slope (33) of the partition plate (30), a tapered portion (25) that becomes lower in the radial direction.

6. The rotary electric machine (100) according to claim 5, wherein the partition plate (30) is configured such that the outer peripheral surface and an inner peripheral surface are symmetrical with each other with respect to an axial center.

7. The rotary electric machine (100) according to claim 6, wherein the slope (33) is disposed in the second cutout (15B) in a state where the partition plate (30) is attached to the housing (10).

8. A method for manufacturing the rotary electric machine (100) according to any one of claims 1 to 7, the method comprising:
a disposing step (FIG.7A-8) of disposing the partition plate (30) in the housing (10); and
an attaching step (FIG.10-12) of attaching the cover (20) to the housing (10) from the other end,
wherein, in the attaching step, the cover (20) is attached to the housing (10) from the second protruding portion (12B) toward the first protruding portion (12A).

9. The method for manufacturing the rotary electric machine (100) according to claim 8, wherein, in the attaching step (FIG.10), the housing (10) is disposed such that the other end is located upward.

## Patentansprüche

1. Rotierende elektrische Maschine (100), die zum Kühlen durch Strömen eines Kühlmittels an einem Außenumfang konfiguriert ist, wobei die rotierende elektrische Maschine (100) umfasst:
einen Stator (40);
ein Gehäuse (10), das ein zylindrisches Element ist, das den Stator (40) an einem Innenumfang des Gehäuses (10) aufnimmt, wobei das Gehäuse (10) eine Strömungskanalnut (11) umfasst, die so ausgebildet ist, dass diese am Außenumfang des Gehäuses (10) in Umfangsrichtung vertieft ist, wobei das Gehäuse (10) am Außenumfang einen ringförmigen ersten vorragenden Abschnitt (12A) und einen ringförmigen zweiten vorragenden Abschnitt (12B) umfasst, die einander in axialer Richtung über die Strömungskanalnut (11) gegenüberliegen und in radialen Richtung vorragen;
eine Abdeckung (20), die den Außenumfang des Gehäuses (10) abdeckt und mit dem ersten vorragenden Abschnitt (12A) und dem zweiten vorragenden Abschnitt (12B) in Berührung steht;
**dadurch gekennzeichnet, dass** diese ferner umfasst:
eine Trennplatte (30), deren eines Ende in einer ersten Aussparung (15A) angeordnet ist, der am ersten vorragenden Abschnitt (12A) vorgesehen ist, und deren anderes Ende in einer zweiten Aussparung (15B) angeordnet ist, der am zweiten vorragenden Abschnitt (12B) vorgesehen ist, wobei die Trennplatte (30) in axialer Richtung angeordnet ist und die Strömungskanalnut (11) in der Umfangsrichtung unterteilt,
wobei:
die erste Aussparung (15A) in der Umfangsrichtung eine größere Breite als die zweite Aussparung (15B) aufweist; und
das eine Ende der Trennplatte (30) mit einer zur ersten Aussparung (15A) identischen Breite ausgebildet ist, und das andere Ende der Trennplatte (30) mit einer zur zweiten Aussparung (15B) identischen Breite ausgebildet ist.

2. Rotierende elektrische Maschine (100) nach Anspruch 1, wobei die Abdeckung (20) von einem Endabschnitt auf einer Seite des zweiten vorragenden Abschnitts (12B) am Gehäuse (10) eingepasst ist.

3. Rotierende elektrische Maschine (100) nach Anspruch 1 oder 2, wobei das Gehäuse (10) einen Anschlag (13) an einem Endabschnitt auf einer Seite des ersten vorragenden Abschnitts (12A) umfasst, wobei der Anschlag (13) zum Begrenzen einer Bewegung der Abdeckung (20) entlang des Außenumfangs konfiguriert ist.

4. Rotierende elektrische Maschine (100) nach einem der Ansprüche 1 bis 3, wobei:
das Gehäuse (10) jeweils abgeschrägte Abschnitte an einem offenen Endabschnitt der ersten Aussparung (15A) in einer Außenumfangsfläche des ersten vorstehenden Abschnitts (12A) und an einem offenen Endabschnitt der zweiten Aussparung (15B) in einer Außenumfangsfläche des zweiten vorragenden Abschnitts (12B) umfasst; und
die Trennplatte (30) jeweils an Endabschnitten einer der Strömungskanalnut (11) zugewandten Oberfläche abgeschrägte Abschnitte umfasst.

5. Rotierende elektrische Maschine (100) nach einem der Ansprüche 1 bis 4, wobei:
der erste vorragende Abschnitt (12A) so konfiguriert ist, dass dieser in der radialen Richtung höher als der zweite vorragende Abschnitt (12B) ist;
die Trennplatte (30) eine Abschrägung (33) an einer Außenumfangsfläche umfasst, die in radialer Richtung vom dem einen Ende in Richtung des anderen Endes niedriger wird; und
die Abdeckung (20) an einer der Abschrägung (33) der Trennplatte (30) gegenüberliegenden Position einen sich verjüngenden Abschnitt (25) umfasst, der in radialer Richtung niedriger wird.

6. Rotierende elektrische Maschine (100) nach Anspruch 5, wobei die Trennplatte (30) so konfiguriert ist, dass die Außenumfangsfläche und eine Innenumfangsfläche in Bezug auf eine axiale Mitte symmetrisch zueinander sind.

7. Rotierende elektrische Maschine (100) nach Anspruch 6, wobei die Abschrägung (33) in der zweiten Aussparung (15B) in einem Zustand angeordnet ist, in dem die Trennplatte (30) am Gehäuse (10) befestigt ist.

8. Verfahren zum Herstellen der rotierenden elektrischen Maschine (100) nach einem der Ansprüche 1 bis 7, wobei das Verfahren umfasst:
einen Anordnungsschritt (FIG. 7A-8) zum Anordnen der Trennplatte (30) im Gehäuse (10); und
einen Befestigungsschritt (FIG. 10-12) zum Befestigen der Abdeckung (20) am Gehäuse (10) vom anderen Ende,
wobei die Abdeckung (20) im Befestigungsschritt am Gehäuse (10) vom zweiten vorragenden Abschnitt (12B) in Richtung des ersten vorragenden Abschnitts (12A) befestigt wird.

9. Verfahren zum Herstellen der rotierenden elektrischen Maschine (100) nach Anspruch 8, wobei das Gehäuse (10) im Befestigungsschritt (FIG. 10) so angeordnet wird, dass das andere Ende nach oben gerichtet ist.

## Revendications

1. Machine électrique rotative (100) configurée pour être refroidie par écoulement d'un fluide de refroidissement sur une périphérie externe, la machine électrique rotative (100) comprenant :
un stator (40) ;
un boîtier (10) qui est un élément cylindrique recevant le stator (40) sur une périphérie interne du boîtier (10), le boîtier (10) comportant une rainure de passage d'écoulement (11) formée de manière à être en retrait dans une direction circonférentielle sur la périphérie externe du boîtier (10), le boîtier (10) comportant sur la périphérie externe une première partie en saillie annulaire (12A) et une deuxième partie en saillie annulaire (12B) se faisant face dans une direction axiale via la rainure de passage d'écoulement (11) et faisant saillie dans une direction radiale ;
un couvercle (20) recouvrant la périphérie externe du boîtier (10) et entrant en contact avec la première partie en saillie (12A) et la deuxième partie en saillie (12B) ; **caractérisée en ce qu'**elle comprend en outre :
une plaque de séparation (30) ayant une première extrémité disposée dans une première découpe (15A) fournie à la première partie en saillie (12A) et l'autre extrémité disposée dans une deuxième découpe (15B) fournie à la deuxième partie en saillie (12B), la plaque de séparation (30) étant agencée dans la direction axiale et séparant la rainure de passage d'écoulement (11) dans la direction circonférentielle,
où :
la première découpe (15A) a une largeur supérieure à celle de la deuxième découpe (15B) dans la direction circonférentielle ; et
la première extrémité de la plaque de séparation (30) est formée de manière à avoir une largeur égale à celle de la première découpe (15A), et l'autre extrémité de la plaque de séparation (30) est formée de manière à avoir une largeur égale à celle de la deuxième découpe (15B).

2. Machine électrique rotative (100) selon la revendication 1, dans laquelle le couvercle (20) est ajusté sur le boîtier (10) depuis une partie d'extrémité sur un côté de la deuxième partie en saillie (12B).

3. Machine électrique rotative (100) selon la revendication 1 ou 2, dans laquelle le boîtier (10) comporte une butée (13) au niveau d'une partie d'extrémité sur un côté de la première partie en saillie (12A), la butée (13) étant configurée pour restreindre le mouvement du couvercle (20) le long de la périphérie externe.

4. Machine électrique rotative (100) selon l'une quelconque des revendications 1 à 3, dans laquelle :
le boîtier (10) comporte des parties chanfreinées respectivement au niveau d'une partie d'extrémité ouverte de la première découpe (15A) dans une surface périphérique externe de la première partie en saillie (12A) et au niveau d'une partie d'extrémité ouverte de la deuxième découpe (15B) dans une surface périphérique externe de la deuxième partie en saillie (12B) ; et
la plaque de séparation (30) comporte des parties chanfreinées respectivement au niveau des parties d'extrémité d'une surface faisant face à la rainure de passage d'écoulement (11).

5. Machine électrique rotative (100) selon l'une quelconque des revendications 1 à 4, dans laquelle :
la première partie en saillie (12A) est configurée de manière à être plus élevée que la deuxième partie en saillie (12B) dans la direction radiale ;
la plaque de séparation (30) comporte, sur une surface périphérique externe, une pente (33) qui diminue dans la direction radiale de la première extrémité vers l'autre extrémité ; et
le couvercle (20) comporte, à une position faisant face à la pente (33) de la plaque de séparation (30), une partie effilée (25) qui diminue dans la direction radiale.

6. Machine électrique rotative (100) selon la revendication 5, dans laquelle la plaque de séparation (30) est configurée de sorte que la surface périphérique externe et une surface périphérique interne soient symétriques l'une à l'autre par rapport à un centre axial.

7. Machine électrique rotative (100) selon la revendication 6, dans laquelle la pente (33) est disposée dans la deuxième découpe (15B) dans un état dans lequel la plaque de séparation (30) est attachée au boîtier (10).

8. Procédé de fabrication de la machine électrique rotative (100) selon l'une quelconque des revendications 1 à 7, le procédé comprenant :
une étape de mise en place (FIG.7A-8) qui consiste à placer la plaque de séparation (30) dans le boîtier (10) ; et
une étape d'attache (FIG.10-12) qui consiste à attacher le couvercle (20) au boîtier (10) depuis l'autre extrémité,
dans lequel, à l'étape d'attache, le couvercle (20) est attaché au boîtier (10) de la deuxième partie en saillie (12B) vers la première partie en saillie (12A).

9. Procédé de fabrication de la machine électrique rotative (100) selon la revendication 8, dans lequel, à l'étape d'attache (FIG.10), le boîtier (10) est disposé de sorte que l'autre extrémité soit située vers le haut.
